Europäisches Patentamt

European Patent Office

Office européen des brevets

(11) Veröffentlichungsnummer : **0 077 990**
**B1**

(12) **EUROPÄISCHE PATENTSCHRIFT**

(45) Veröffentlichungstag der Patentschrift :
15.03.89

(51) Int. Cl.⁴ : **A 63 B 45/00**

(21) Anmeldenummer : **82109584.1**

(22) Anmeldetag : **16.10.82**

(54) Verfahren zum Belegen von Spielbällen mit Deckteilen.

(30) Priorität : **23.10.81 DE 3142065**
**29.07.82 DE 3228341**

(43) Veröffentlichungstag der Anmeldung :
**04.05.83 Patentblatt 83/18**

(45) Bekanntmachung des Hinweises auf die Patenterteilung : **15.03.89 Patentblatt 89/11**

(84) Benannte Vertragsstaaten :
**FR GB IT SE**

(56) Entgegenhaltungen :
**FR-A- 2 128 830**
**GB-A- 642 469**
**US-A- 2 509 528**

(73) Patentinhaber : **Siebertz, Dietmar**
**Am Heinichenberg 9**
**D-6454 Bruchköbel 1 (DE)**

(72) Erfinder : **Siebertz, Dietmar**
**Am Heinichenberg 9**
**D-6454 Bruchköbel 1 (DE)**
Erfinder : **Siebertz, Stefan**
**Zumaltenforst 5**
**D-5210 Troisdorf 1 (DE)**

(74) Vertreter : **Eyer, Eckhardt Philipp, Dipl.-Ing. et al**
**Patentanwälte Eyer & Linser Robert-Bosch-Strasse 12a**
**D-6072 Dreieich (DE)**

## Beschreibung

Die Erfindung betrifft ein Verfahren und eine Vorrichtung zum Belegen von Spielbällen, insbesondere Tennisbällen, bei dem auf einen beleimten Ballkern zwei im wesentlichen hantelförmige Deckteile in einem Winkel von 90° ineinandergreifend nacheinander durch Rollen über die ausgelegten hantelförmigen Deckteile aufgebracht werden, wobei die Deckteile zu mehreren zu einem Magazin gestapelt werden und das Magazin derart mit einer Leimschicht versehen wird, daß die Deckteile nur an ihren Umfangsflächen beleimt sind.

Es ist aus der US-PS 2 509 528 eine Einrichtung zum Belegen von Spielbällen, insbesondere Tennisbällen, bekannt geworden, die aus einem Rundlauftisch mit insgesamt sechs im wesentlichen gleichgestalteten Arbeitstischen besteht, in die jeweils zwei Deckteile und ein Ballkern von Hand eingelegt werden und die nacheinander an fünf Arbeitsköpfen angestellt werden, von denen taktweise die verschiedenen Rollvorgänge zum Andrücken der Deckteile an den Ballkern ausgeführt werden. Bei der bekannten Einrichtung handelt es sich um eine konstruktiv außerordentlich aufwendige Einrichtung, wobei trotz des erheblichen konstruktiven Aufwandes nur ein teilautomatischer Arbeitsablauf erreicht wird insofern, als sowohl die beiden Deckteile als auch der Ballkern einzeln manuell in die Einrichtung eingelegt werden müssen, wobei bei einem Umlauf des Arbeitstisches nur jeweils ein Ball fertiggestellt werden kann.

Der vorliegenden Erfindung liegt als Aufgabe die Schaffung eines Verfahrens und einer Vorrichtung zum Belegen von Spielbällen zugrunde, mit deren Hilfe bei wesentlich verringertem konstruktivem Aufwand eine vollautomatisierte Belegung von Spielbällen, insbesondere Tennisbällen mit Deckteilen möglich ist. Die Erfindung besteht darin, daß die beleimten Ballkerne nacheinander zunächst mittels einer ersten Andruckeinrichtung derart in Längsrichtung über das Magazin gerollt werden, daß der Ballkern beginnend mit der Berührung des zuoberst liegenden Deckteiles eine der Deckteillänge zuzüglich der Hälfte des verbleibenden Zwischenspaltes zwischen den beiden Längsenden des Deckteiles entsprechenden Weg zurücklegt und am Ende dieses Weges mittels einer zweiten Andruckeinrichtung über eine etwa einem halben Ballumfang und einem halben Zwischenspalt entsprechende, sich quer zur ersten Andruckbahn ersteckende Blindstrecke und danach über ein weiters Deckteilemagazin gerollt wird derart, daß die Kante des zweiten Deckteiles mit Ziernahtabstand in die Bucht des bereits aufgebrachten Deckteiles eingreift.

Mit Hilfe des erfindungsgemäßen Verfahrens können Spielbälle, insbesondere Tennisbälle, vollautomatisiert im On-Line-Betrieb mit Deckteilen belegt werden. Eine manuelle Handhabung ist nicht mehr erforderlich. Das bei dem bekannten Verfahren erforderliche Einlegen jedes einzelnen Deckteils in die Belegungseinrichtung entfällt, ebenso das Einlegen des Ballkernes in die für die Verklebung erforderliche Stellung. Die Belegung erfolgt in einem zweiphasigen Arbeitsgang, in dem eine vollständige Belegung des Ballkernes mit einer Deckschicht als Vorbereitung für die nachfolgende Vulkanisierungsstufe erreicht wird.

In einer — taktweise arbeitenden — Ausführungsform weist die erfindungsgemäße — auf einem Arbeitstisch angeordnete Abrollbahnen für die Bälle sowie eine Andrück- und eine Vorschubeinrichtung für die Bälle aufweisende — Vorrichtung zur Durchführung des vorstehend beschriebenen Verfahrens vorteilhaft in dem Arbeitstisch zwei im rechten Winkel zueinander stehende Abrollbahnen für die Ballkerne mit jeweils einer der Größe der Deckteile entsprechenden Ausnehmung auf, unter der jeweils eine Hubvorrichtung zum taktweisen Anheben eines Deckteilemagazines um jeweils eine Deckteilstärke und über der eine Andruck- und Vorschubeinrichtung aus zwei ineinander in einem Winkel von 90° geführten, jeweils eine Ballführungskehlung aufweisenden Schlitten angeordnet sind, deren Dimensionierung und Bewegungen derart aufeinander sowie auf die Lage der Ausnehmungen abgestimmt sind, daß die Ballkerne jeweils von dem ersten Schlitten zunächst über das erste Magazin gerollt und durch weiteren Vorschub um eine dem halben verbleibenden Deckteilspalt zwischen den beiden Längsenden des Deckteiles entsprechende Strecke auf den hierzu quer verlaufenden Schlitten übergeben wird, worauf der nunmehr teilbelegte Ballkern durch Bewegung des zweiten Schlittens in dem in seiner Endstellung gehaltenen ersten Schlitten über das zweite Magazin gerollt wird, dessen Vorderkante sich in einem etwa dem halben Ballkernumfang und einem halben Zwischenspalt entsprechenden Abstand von der Übergabelinie zwischen den beiden Schlittenbewegungen befindet.

Mit Hilfe dieser konstruktiv außerordentlich einfachen, lediglich aus einem Rolltisch, einer Hubvorrichtung und der aus zwei ineinandergeführten Schlitten gebildeten Andruck- und Vorschubeinrichtung gebildeten Vorrichtung kann in taktweisem Betrieb vollautomatisiert das Belegen von Spielbällen erfolgen, wobei mit jedem lediglich zweiphasigen Arbeitstakt das vollständige Belegen eines Spielballes erfolgt. Hierbei kann das Anstellen nicht nur der Deckteile sondern auch der Ballkerne selbst ebenfalls vollautomatisch mit Hilfe eines Trichter- oder Bandeinlaufes oder einer anderen geeigneten Transporteinrichtung erfolgen, an deren Auslauf die Bälle taktweise einzeln von unten mittels einer Hubeinrichtung in Anlage an eine Einlaufstrecke des ersten Schlittens gebracht werden, durch dessen Bewegung der Ballkern auf den Rolltisch überführt und in die Belegstrecke transportiert wird. Eine derartige Einrichtung kann etwa aus einem mit nach unten offenen Schalen versehenen Transportband für die beleimten Ballkerne sowie einem Hubteller unter der ersten Andruckeinrichtung bestehen, mit dessen Hilfe die Ballkerne einzeln von dem Zuführungstransportband bis zur Berührung mit der Andruckeinrichtung angehoben werden.

In einer anderen Ausführungsform der Erfindung kann die Belegvorrichtung aus einem ebenen Arbeitstisch mit jeweils einer der Form der Deckteile entsprechenden Ausnehmung bestehen, unter dem jeweils eine Hubvorrichtung zum taktweisen Anheben eines Deckteilemagazines um jeweils eine Deckteilstärke angeordnet ist sowie jeweils einem endlosen Andruck- und Transportgliederband mit gekehlten, sich zu einer Führungsbahn für den Ballkern ergänzenden Gliedern, die mittels eines sich quer zum Gliederband der ersten Belegbahn erstreckenden und in einem der Balldicke entsprechenden Abstand parallel unter das Gliederband der zweiten Belegbahn reichenden Transportbandes miteinander verbunden sind, wobei die Geschwindigkeiten des Transportbandes und des Gliederbandes der zweiten Belegbahn derart aufeinander abgestimmt sind, daß der teilbelegte Ballkern aufgrund der durch die beiden unterschiedlichen Umlaufgeschwindigkeiten bewirkten resultierenden Bewegung bis zum Erreichen des Magazins des zweiten Belegtisches eine Drehung um etwa 225° nach vorn bezw. 135° nach rückwärts ausführt in dem Sinne, daß die vordere Deckteilkante mit Ziernahtabstand in die Bucht des bereits aufgebrachten Deckteiles eingreift.

Mit Hilfe dieser Ausführungsform einer Belegeinrichtung kann in ebenfalls vollautomatisiertem On-Line-Betrieb eine kontinuierliche Belegung von Spielbällen vorgenommen werden, wobei die Durchlauffolge nur durch die für das Anheben des Deckteilemagazines nach jedem Ballkerndurchlauf benötigte Zeit bestimmt wird.

Zur Gewährleistung eines ausreichend flächigen Andruckes der Ballkerne an die Deckteile auch in den unteren Magazinbereichen, in denen der Deckteilestapel nur noch eine geringe Eigenflexibilität besitzt, ist die Hubeinrichtung vorteilhaft mit einem elastisch nachgiebigen bzw. flexiblen Belag versehen. Es ist weiterhin zum Zwecke der Zuführung der Bälle in einer der Belegungsgeschwindigkeit entsprechenden Taktfolge vorteilhaft ein mit nach unten offenen Schalen versehenes Zuführungstransportband für die beleimten Ballkerne sowie unter der ersten Andruckeinrichtung ein Hubteller vorgesehen, mit dessen Hilfe der Ballkern von dem Zuführungstransportband bis zur Berührung mit der Andruckeinrichtung angehoben wird.

Die Erfindung ist in der Zeichnung beispielsweise veranschaulicht. Es zeigen

Fig. 1 in perspektivischer Darstellung das Schema einer Belegeinrichtung für taktweisen Betrieb

Fig. 2 eine Ballkernzuführungseinrichtung in schematischer Seitenansicht

Fig. 3 eine Hubvorrichtung für ein Deckteilemagazin in schematischer Seitenansicht

Fig. 4 eine perspektivisch-schematische Wiedergabe einer Belegeinrichtung für kontinuierlichen On-Line-Betrieb

Fig. 5 eine schematische Seitenansicht des ersten Belegtisches der in Fig. 4 dargestellten Einrichtung.

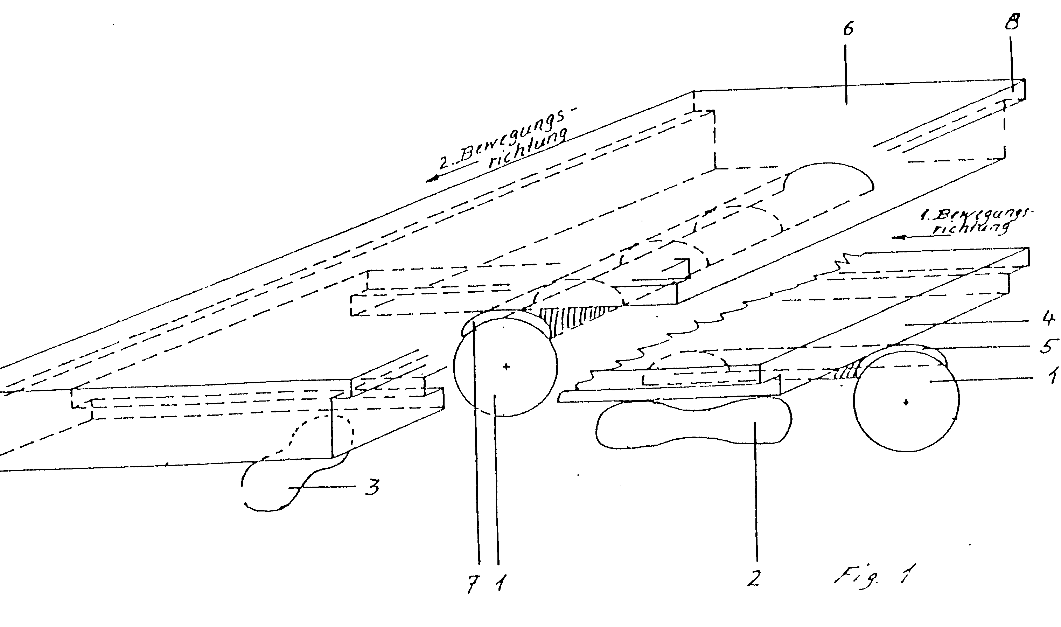

In der Zeichnung sind mit 1 jeweils ein Ballkern und mit 2, 3 hantelförmige Deckteile bezeichnet, die in einem Winkel von 90° ineinandergreifend nacheinander durch Rollen des beleimten Ballkernes über die ausgelegten hantelförmigen Deckteile auf den Ballkern 1 aufgebracht werden sollen. In Fig. 1 der Zeichnung ist jeweils nur ein hantelförmiges Deckteil 2, 3 schematisch dargestellt. Es ist somit davon auszugehen, daß an Stelle der einzeln dargestellten hantelförmigen Deckteile jeweils ein Deckteilemagazin vorgesehen ist.

Über dem Arbeitstisch befinden sich eine erste Andruckeinrichtung in Form eines Schlittens 4, der einen sich längs über dem Magazin der Deckteile 2 bzw. der entsprechenden Tischöffnung erstreckenden kugelig gewölbten Andruck- und Führungskanal 5 aufweist und in Richtung der Längsachse der Deckteilemagazinöffnung hin- und herbewegbar ist. Diese Richtung ist in der Zeichnung mit « 1. Bewegungsrichtung » definiert. Außer dem Schlitten 4 ist ein weiterer Schlitten 6 mit ebenfalls einem Führungs- und Andruckkanal 7 vorgesehen, der in einer um 90° gegenüber dem Schlitten 4 versetzt liegenden Richtung hin- und herbewegt werden kann, wobei sich der Führungskanal in Längsrichtung über dem Magazin der Deckteile 3 erstreckt. Hierbei kann entweder der erste Schlitten 4 in dem Schlitten 6 und dieser wiederum in einer tischfesten Führung 8 geführt sein, es können jedoch auch beide Schlitten gesondert in einer tischfesten Führung geführt werden.

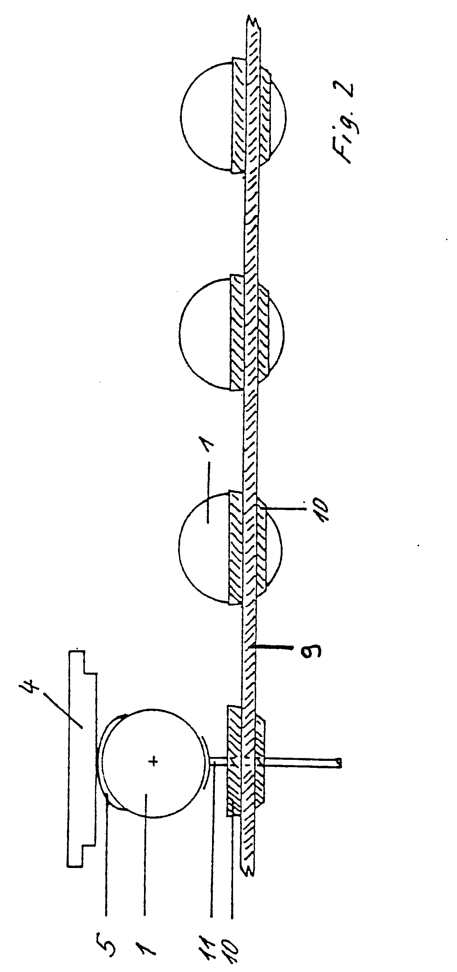

In Fig. 2 der Zeichnung, in der im übrigen die einander entsprechenden Teile mit denselben Bezugsziffern wie in Fig. 1 bezeichnet sind, ist mit 9 ein Transportband bezeichnet, das mit nach unten offenen Schalen 10 versehen ist und mit dessen Hilfe die Ballkerne 1 einzeln in den Bereich des ersten Schlittens 4 gebracht werden. Unter dem Transportband befindet sich im Bereich des Schlittens 4 ein Hubteller 11, mit dessen Hilfe unter Durchgriff durch die offene Schale 10 der Ballkern 1 angehoben und in Berührung mit dem Schlitten 4 bzw. dem Führungskanal 5 gebracht werden kann.

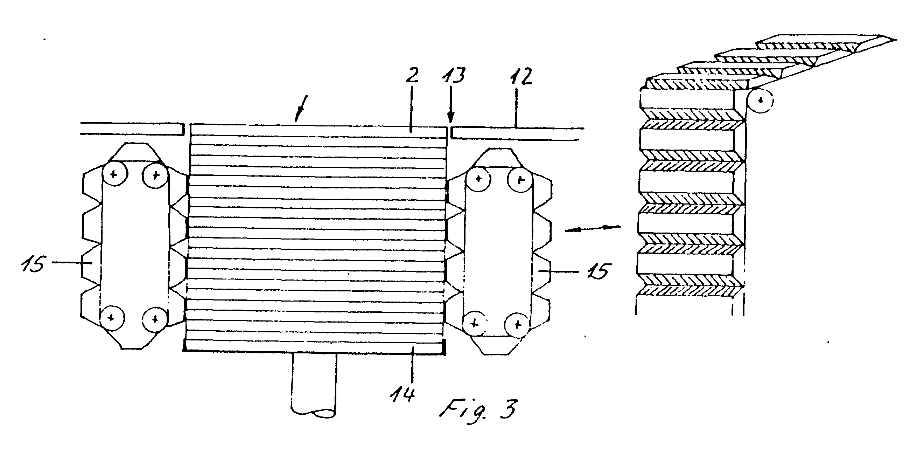

In Fig. 3 der Zeichnung ist mit 12 der Arbeitstisch der Einrichtung wiedergegeben, in dem sich eine der Kontur der Deckteile entsprechende Öffnung 13 befindet, unter der wiederum ein Magazinträger 14 angeordnet ist. Mit Hilfe einer Hubeinrichtung kann der Magazinträger taktweise um jeweils eine Deckteildicke derart angehoben werden, daß sich jeweils das an oberster Stelle des Magazins liegende Deckteil 2 in der Ebene des Arbeitstisches befindet. Als Hubvorrichtung dient im dargestellten Fall ein Hubteller 14 mit zwei das Magazin an gegenüberliegenden Seitenflächen führenden Gliederbändern 15, an deren Stelle jedoch auch jede andere geeignete Hub- und Führungseinrichtung vorgesehen sein kann.

Zur Belegung des Balles wird der Ballkern zunächst mit Hilfe des Transportbandes 9 in den Bereich des Schlittens 4 transportiert und mittels des Hubtellers 11 soweit angehoben, daß der Ballkern in Kontakt mit dem Führungskanal 5 gelangt. Danach wird der Schlitten 4 — siehe Fig. 1 — in der ersten Bewegungsrichtung bewegt, wobei der Ballkern 1 auf dem Arbeitstisch über das Deckteilemagazin gerollt wird, von dem er aufgrund seiner Oberflächenbeleimung das oberste Deckteil unter Verklebung abnimmt. Durch entsprechenden Vorschub des Schlittens 4 kommt der nunmehr teilweise belegte Ballkern von dem Schlitten 4 frei und gelangt in den Bereich des Führungskanales 7, von dem er erfaßt und durch Bewegung des Schlittens 6 in der zweiten Bewegungsrichtung über das zweite Deckteilemagazin 3 gerollt wird, von dem er in gleicher Weise das oberste Deckteil unter Verklebung abnimmt. Hierbei sind die Bewegungsstrecken und Bahnenabstände derart aufeinander abgestimmt, daß die beiden hantelförmigen Deckteile in einem Winkel von 90° ineinandergreifend aufgebracht werden und die für derart belegte Bälle typische Schlingenaht gebildet wird. Der Belegungsvorgang ist damit abgeschlossen und die Schlitten werden in ihre Ausgangslage zur Übernahme und Belegung des nächsten Ballkernes zurückgeführt.

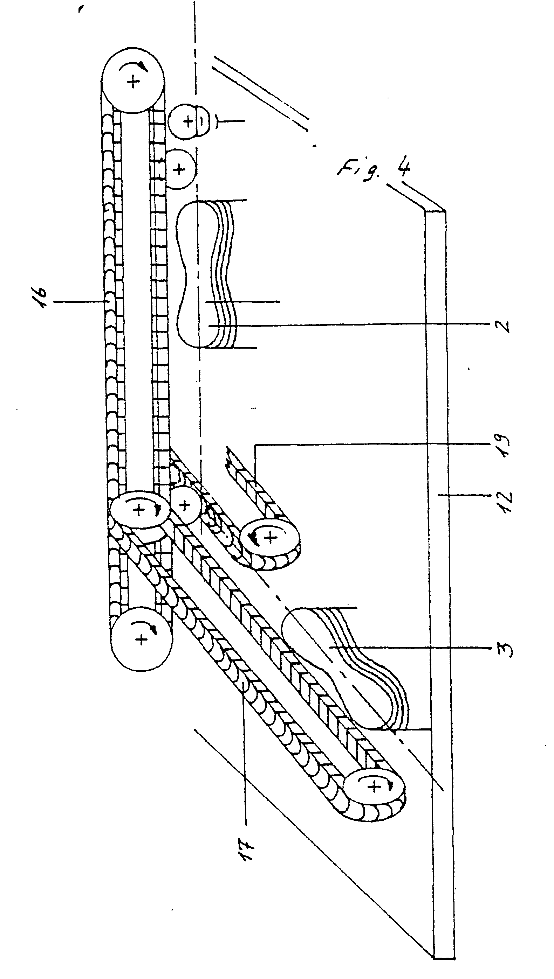

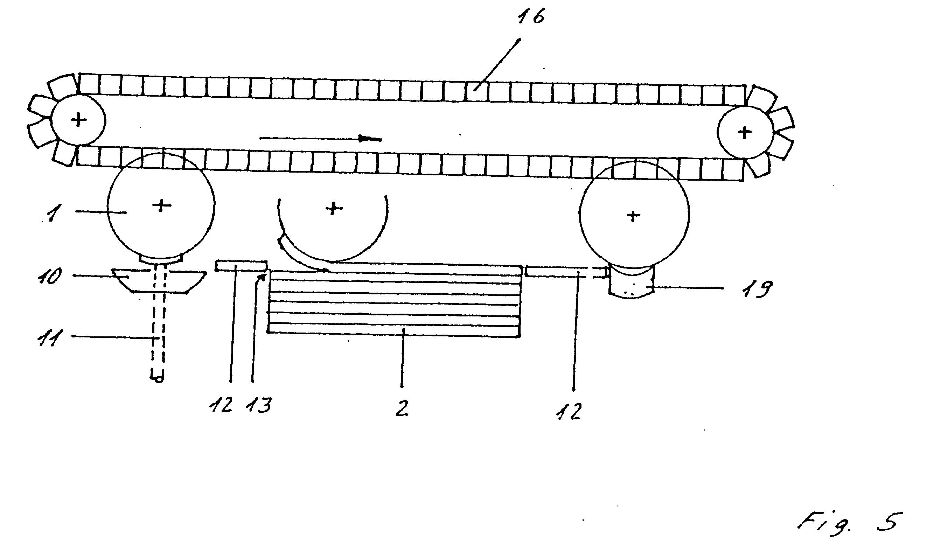

Bei der in Fig. 4 und 5 wiedergegebenen, für On-Line-Betrieb geeigneten Ausführungsform ist ebenfalls ein Belegtisch 12 mit jeweils der Form der Deckteile 2 entsprechenden Ausnehmungen 13 vorgesehen, unter denen sich jeweils eine Hubvorrichtung zum taktweisen Heben eines Deckteilemagazines um jeweils eine Deckteilstärke angeordnet ist. Die Andruckeinrichtung besteht in diesem Falle aus jeweils einem Gliederband 16 bzw. 17 mit gekehlten, sich zu einer Führungsbahn für den Ballkern ergänzenden Gliedern, die mittels eines sich quer zum Gliederband 16 der ersten Belegbahn erstreckenden und in einem der Balldicke entsprechenden Abstand parallel unter das Gliederband der zweiten Belegbahn reichenden Transportbandes 19 miteinander verbunden sind, wobei die Geschwindigkeiten des Transportbandes 19 und des Gliederbandes 17 der zweiten Belegbahn derart aufeinander abgestimmt sind, daß der teilbelegte Ballkern aufgrund der durch die beiden unterschiedlichen Umlaufgeschwindigkeiten bewirkten resultierenden Bewegung bis zum Erreichen des Magazines der zweiten Belegbahn eine Drehung um etwa 225° nach vorn oder 135° nach rückwärts ausführt derart, daß die vordere Deckteilkante mit Sichtnahtabstand an die Buchtkante des bereits aufgebrachten Deckteiles anschließt. Mit Hilfe dieser Belegeinrichtung ist ein kontinuierliches Belegen der Bälle in kurzer Zeittaktfolge und ohne Unterbrechung wegen einer notwendigen Rückführung der Einrichtung in die Nullstellung möglich.

**Patentansprüche**

1. Verfahren zum Belegen von Spielbällen, insbesonderen Tennisbällen, bei dem auf einen beleimten Ballkern zwei im wesentlichen hantelförmige Deckteile in einem Winkel von 90° ineinandergreifend nacheinander durch Rollen über die ausgelegten hantelförmigen Deckteile (2, 3) aufgebracht werden, wobei die Deckteile (2, 3) zu mehreren zu einem Magazin gestapelt werden und das Magazin derart mit einer Leimschicht versehen wird, daß die Deckteile nur an ihren Umfangsflächen beleimt sind, dadurch gekennzeichnet, daß die beleimten Ballkerne (1) nacheinander zunächst mittels einer ersten Andruckeinrichtung (4, 16) derart in Längsrichtung über das Magazin gerollt werden, daß der Ballkern (11) beginnend mit der Berührung des zuoberst liegenden Deckteiles eine der Deckteillänge zuzüglich der Hälfte des verbleibenden Zwischenspaltes zwischen den beiden Längsenden des Deckteiles entsprechenden Weg zurücklegt und am Ende dieses Weges mittels einer zweiten Andruckeinrichtung (6, 17) über eine etwa einem halben Ballumfang und einem halben Zwischenspalt entsprechende, sich quer zur ersten Andruckbahn erstreckende Blindstrecke und danach über ein weiteres Deckteilemagazin gerollt wird derart, daß die Kante des zweiten Deckteiles mit Ziernahtabstand in die Bucht des bereits aufgebrachten Deckteiles eingreift.

2. Verfahren nach Anspruch 1, dadurch gekennzeichnet, daß die das Magazin bildenden Deckteile zwischen Deckelplatten fest eingespannt und durch Tauchen der Packung in ein Kleberbad an ihren Randflächen beleimt werden.

3. Vorrichtung zur Durchführung des Verfahrens nach Anspruch 1 mit auf einem Arbeitstisch (12) angeordneten Abrollbahnen für die Bälle sowie einer Andrück- und einer Vorschubeinrichtung, dadurch gekennzeichnet, daß in dem Arbeitstisch (12) zwei im rechten Winkel zueinander stehende Abrollbahnen für die Ballkerne (1) mit jeweils einer der Größe der Deckteile entsprechenden Ausnehmung (13) vorgesehen sind, unter der jeweils eine Hubvorrichtung (14) zum taktweisen Anheben eines Deckteilemagazines um jeweils eine Deckteilstärke und über der eine Andruck- und Vorschubeinrichtung (4, 6) aus zwei ineinander in einem Winkel von 90° geführten, jeweils eine Ballführungskehlung (5, 7) aufweisenden Schlitten (4, 6) angeordnet sind, deren Dimensionierung und Bewegungen derart aufeinander sowie auf die Lage der Ausnehmungen (13) abgestimmt sind, daß die Ballkerne (1) jeweils von dem ersten Schlitten (4) zunächst über das erste Magazin (2) gerollt und durch weiteren Vorschub um eine dem halben verbleibenden Deckteilspalt zwischen den beiden Längsenden des Deckteiles entsprechende Strecke auf den hierzu quer verlaufenden Schlitten (6) übergeben wird, worauf der nunmehr teilbelegte Ballkern durch Bewegung des zweiten Schlittens (6) in dem in seiner Endstellung gehaltenen ersten Schlitten (4) über das zweite Magazin (3) gerollt wird, dessen Vorderkante sich in einem etwa dem halben Ballkernumfang und einem halben Zwischenspalt entsprechenden Abstand von der Übergabelinie zwischen den beiden Schlittenbewegungen befindet.

4. Vorrichtung zur Durchführung des Verfahrens nach Anspruch 1, mit einem Arbeitstisch (12) für die Bälle sowie einer Andrück- und einer Vorschubeinrichtung gekennzeichnet durch auf dem ebenen Arbeitstisch (12) vorgesehene mit jeweils eine der Form der Deckteile entsprechende Ausnehmung (13), unter dem jeweils eine Hubvorrichtung (14) zum taktweisen Anheben eines Deckteilemagazines (2, 3) um jeweils eine Deckteilstärke angeordnet ist sowie jeweils einem endlosen Andruck- und Transportgliederband (16, 17) mit gekehlten, sich zu einer Führungsbahn für den Ballkern ergänzenden Gliedern, die mittels eines sich quer zum Gliederband der ersten Belegbahn erstreckenden und in einem der Balldicke entsprechenden Abstand parallel unter das Gliederband (17) der zweiten Belegbahn reichenden Transportbandes (19) miteinander verbunden sind, wobei die Geschwindigkleiten des Transportbandes (19) und des Gliederbandes (17) der zweiten Belegbahn derart aufeinander abgestimmt sind, daß der teilbelegte Ballkern (1) aufgrund der durch die beiden unterschiedlichen Umlaufgeschwindigkeiten bewirkten resultierenden Bewegung bis zum Erreichen des Magazins des zweiten Belegtisches eine Drehung um etwa 225° nach vorn bezw. 135° nach rückwärts ausführt in dem Sinne, daß die vordere Deckteilkante mit Ziernahtabstand in die Bucht des bereits aufgebrachten Deckteiles eingreift.

5. Vorrichtung nach Anspruch 3 oder 4, dadurch gekennzeichnet, daß die Hubeinrichtung mit einem elastisch nachgiebigen Belag versehen ist.

6. Vorrichtung nach einem der Ansprüche 3 bis 5, dadurch gekennzeichnet, daß ein mit nach unten offenen Schalen (10) versehenes Zuführungstransportband (9) für die beleimten Ballkerne sowie unter der ersten Andruckeinrichtung (4, 16) ein Hubteller (11) vorgesehen sind, mit dessen Hilfe der Ballkern (1) von dem Zuführungstransportband (9) bis zur Berührung mit der Andruckeinrichtung (4, 16) angehoben wird.

**Claims**

1. Method of covering balls, more especially tennis balls, wherein two substantially dumbbell-shaped cover members are applied in succession to a glued ball core at an angle of 90° by means of rollers over the laid-out dumbbell-shaped cover members (2, 3) so that they interengage, the cover members (2, 3) being stacked in groups of several cover members to form a magazine, and the magazine being provided with a layer of glue in such a manner that the cover members are only glued on their circumferential faces, characterised in that the glued ball cores (1) are initially rolled longitudinally in succession over the magazine by means of a first pressing arrangement (4, 16) in such a manner that, commencing with contact with the uppermost cover member, the ball core (1) covers a path, which corresponds to the cover member length plus half the remaining gap between the two longitudinal ends of the cover member, and is rolled at the end of this path, by means of a second pressing arrangement (6, 17), over a dummy track, which corresponds to approximately half a ball circumference and half a gap and extends at right angles to the first pressing path, and subsequently over an additional cover member magazine in such a manner that the edge of the second cover member, spaced from the decorative seam, engages in the recess in the cover member which has already been applied.

2. Method according to claim 1, characterised in that the cover members forming the magazine are clamped tightly in position between cover plates and are glued at their edge faces when the package is immersed in a bath of adhesive.

3. Apparatus for accomplishing the method of claim 1, comprising rolling paths for the balls which are disposed on a work table (12), plus a pressing arrangement and an advancing arrangement, characterised in that two rolling paths for the ball cores (1), which extend at right angles to one another, are provided in the work table (12), and each has an opening (13) corresponding to the size of the cover members, a lifting device (14) being disposed beneath each opening for lifting a cover member magazine at timed intervals over a distance corresponding to the thickness of a cover member, and a pressing arrangement and an advancing arrangement (4, 6) being disposed above each opening and comprising two slides (4, 6), which are guided into one another at an angle of 90° and each have a ball guiding channel (5, 7), the dimensions and movements of the slides being adapted to one another and to the position of the openings (13) in such a manner that each ball core (1) is rolled initially over the first magazine (2) by the first slide (4) and, as a result of further advancement over a distance corresponding to half the remaining cover member gap between the two longitudinal ends of the cover member, is transferred to the slide (6) extending at right angles to said track, whereupon the ball core, which is now partially covered as a result of the second slide (6) moving in the first slide (4) which is retained in its end position, is rolled over the second magazine (3), the front edge of which is situated at a distance from the delivery line between the two slide movements, such distance corresponding to approximately half the ball core circumference and half a gap.

4. Apparatus for accomplishing the method of claim 1, comprising a work table (12) for the balls plus a pressing arrangement and an advancing arrangement, characterised by openings (13), which are provided in the flat work table (12) and correspond to each shape of the cover members, a lifting device (14) being disposed beneath each opening for lifting a cover member magazine (2, 3) at timed intervals over a distance corresponding to the thickness of a cover member, and an endless pressing belt and jointed conveyor belt (16, 17), each belt being provided with grooved members which combine to form a guide path for the ball core and which are interconnected by means of a conveyor belt (19), which extends at right angles to the jointed belt of the first covering path and reaches in parallel, at a distance corresponding to the ball thickness, beneath the jointed belt (17) of the second covering path, the speeds of the conveyor belt (19) and of the jointed belt (17) of the second covering path being adapted to one another in such a manner that, due to the resultant movement occasioned by the two different circumferential speeds until the magazine of the second covering table is reached, the partially covered ball core (1) executes a rotational movement through approximately 225° forwardly, or respectively 135° rearwardly, such that the front cover member edge, spaced from the decorative seam, engages in the recess in the cover member which has already been applied.

5. Apparatus according to claim 3 or 4, characterised in that the lifting arrangement is provided with an elastically resilient covering.

6. Apparatus according to any of claims 3 to 5, characterised in that a feed conveyor belt (9) is provided for the glued ball cores, which belt is provided with dishes (10) which are open at their lower ends, and a lifting plate (11) is provided beneath the first pressing arrangement (4, 16), which permits the ball core (1) to be lifted from the feed conveyor belt (9) until it is in contact with the pressing arrangement (4, 16).

## Revendications

1. Procédé de revêtement de balles de jeu, en particulier de balles de tennis, dans lequel deux pièces d'enveloppe ayant sensiblement la forme d'un haltère sont appliquées successivement sur un noyau de balle encollé, de manière à s'engrener sous un angle de 90°, par roulement sur les pièces d'enveloppe en forme d'haltère (2, 3) étalées, les pièces d'enveloppe (2, 3) étant empilées à plusieurs pour former un magasin et le magasin étant garni d'une couche de colle de telle manière que les pièces d'enveloppe ne soient encollées que sur leurs surfaces périphériques, caractérisé en ce que les noyaux de balle encollés (1) sont tout d'abord amenés à rouler successivement en direction longitudinale sur le magasin, au moyen d'un premier dispositif d'application sous pression (4, 16), de telle manière que le noyau de balle (1) parcourt, à partir de son entrée en contact avec la pièce d'enveloppe située tout en haut, un trajet qui correspond à la longueur d'une pièce d'enveloppe plus la moitié de l'intervalle subsistant entre les deux extrémités longitudinales de la pièce d'enveloppe, et en ce qu'à la fin de ce trajet, ils sont amenés à rouler, au moyen d'un second dispositif d'application sous pression (6, 17), sur un segment à vide correspondant à peu près à une demi-circonférence de balle et à un demi-intervalle et s'étendant perpendiculairement à la première piste d'application sous pression, puis sur un autre magasin de pièces d'enveloppe, de telle manière que le bord de la seconde pièce d'enveloppe s'engrène, à la distance de la piqûre d'ornementation, dans la concavité de la pièce d'enveloppe déjà posée.

2. Procédé selon la revendication 1, caractérisé en ce que les pièces d'enveloppe formant le magasin sont serrées fermement entre des plaques-couvercles et sont encollées sur leurs faces bordantes par immersion du paquet dans un bain de colle.

3. Dispositif pour l'exécution du procédé selon la revendication 1, comportant des pistes de roulement pour les balles, disposées sur une table de travail (12), ainsi qu'un dispositif d'application sous pression et un dispositif d'avancement, caractérisé en ce qu'il est prévu, sur la table de travail (12), deux pistes de roulement pour les noyaux de balle (1), disposées à angle droit l'une par rapport à l'autre et comportant chacune un évidement (13) qui correspond à la dimension des pièces d'enveloppe, au-dessous de chacun desquels est disposé un mécanisme élévateur (14) pour le soulèvement pas à pas d'un magasin de pièces d'enveloppe d'une épaisseur de pièce d'enveloppe chaque fois, et au-dessus desquels est placé un dispositif d'application sous pression et d'avancement (4, 6) formé de deux chariots (4, 6) qui sont guidés l'un dans l'autre selon un angle de 90° et présentent chacun une cannelure de guidage de balles (5, 7), chariots dont les dimensions et les mouvements sont adaptés les uns par rapport aux autres, ainsi que par rapport à la position des évidements (13), de telle manière que chacun des noyaux de balle (1) soit amené, par le premier chariot (4), à rouler tout d'abord sur le premier magasin (2), puis à parcourir un trajet supplémentaire correspondant à la moitié restante de l'intervalle entre les deux extrémités longitudinales de la pièce d'enveloppe pour être transféré sur le chariot (6) qui s'étend perpendiculairement à ce trajet, après quoi le noyau de balle, qui est alors partiellement revêtu, est amené, par le mouvement du second chariot (6) dans le premier chariot (4) maintenu dans sa position de fin de course, à rouler sur le second magasin (3), dont le bord antérieur se trouve, par rapport à la ligne de jonction entre les mouvements des deux chariots, à une distance correspondant à peu près à la demi-circonférence d'une balle et à un demi-intervalle.

4. Dispositif pour l'exécution du procédé selon la revendication 1, comportant une table de travail (12) pour les balles, ainsi qu'un dispositif d'application sous pression et un dispositif d'avancement, caractérisé par des évidements (13) formés dans la table de travail plane (12) et correspondant chacun à la forme des pièces d'enveloppe, évidements au-dessous de chacun desquels est disposé un mécanisme élévateur (14) pour le soulèvement pas à pas d'un magasin de pièces d'enveloppe (2, 3) d'une épaisseur de pièce d'enveloppe chaque fois, ainsi que par des bandes sans fin respectives de maillons d'application sous pression et de transport (16, 17) comportant des maillons cannelés qui forment ensemble une piste de guidage pour le noyau de balle, pistes qui sont reliées l'une à l'autre au moyen d'une bande transporteuse (19) qui s'étend perpendiculairement à la bande de maillons de la première piste de revêtement et qui passe parallèlement au-dessous de la bande de maillons (17) de la seconde piste de revêtement, à une distance correspondant à l'épaisseur d'une balle, les vitesses de la bande transporteuse (19) et de la bande de maillons (17) de la seconde piste de revêtement étant adaptées l'une à l'autre de telle manière qu'en raison du mouvement résultant, dû à la différence des deux vitesses de rotation, le noyau de balle partiellement revêtu (1) effectue, avant d'atteindre le magasin des secondes pièces d'enveloppe, une rotation d'environ 225° vers l'avant ou 135° vers l'arrière, afin que le bord antérieur de la pièce d'enveloppe s'engrène, à une distance correspondant à la piqûre ornementale, dans la concavité de la pièce d'enveloppe déjà posée.

5. Dispositif selon la revendication 3 ou 4, caractérisé en ce que le dispositif élévateur est garni d'un revêtement capable de céder élastiquement.

6. Dispositif selon l'une quelconque des revendications 3 à 5, caractérisé en ce qu'il est prévu une bande transporteuse d'alimentation (9) munie de cuvettes ouvertes vers le bas (10) pour les noyaux de balle encollés, ainsi qu'un plateau élévateur (11) qui est disposé au-dessous du premier dispositif d'application sous pression (4, 16) et au moyen duquel le noyau de balle (11) est soulevé à partir de la bande transporteuse d'alimentation (9) jusqu'au contact du dispositif d'application sous pression (4, 16).

2. Bewegungsrichtung

1. Bewegungsrichtung

EP 0 077 990 B1

Fig. 1

Fig. 2

2

Fig. 3

Fig. 4

Fig. 5